# EUROPÄISCHE PATENTSCHRIFT

(11) **EP 0 513 538 B1**
(45) Veröffentlichungstag und Bekanntmachung des Hinweises auf die Patenterteilung: **28.06.1995**
(21) Anmeldenummer: 92106492.9
(22) Anmeldetag: 15.04.1992
(51) Int. Cl.: B01J 19/12, B29C 59/16

(54) **Verwendung eines UV-Strahlers zur Behandlung von Oberflächen**
Use of a ultraviolett radiation device for surface treatment
Utilisation d'un dispositif de rayonnement ultraviolet pour le traitement de surfaces

(30) Priorität: 25.04.1991 DE 4113524
(43) Veröffentlichungstag der Anmeldung: 19.11.1992
(73) Patentinhaber: Heraeus Noblelight GmbH, D-63801 Kleinostheim (DE)
(72) Erfinder: Esrom, Hilmar, Dr., W-6803 Edingen-Neckarhausen (DE); Baier, Michael, W-6800 Mannheim 31 (DE); Jahnke, Bernd, Dr., W-6903 Neckargemünd (DE)
(74) Vertreter: Kühn, Hans-Christian

(56) Entgegenhaltungen:
- EP-A- 0 492 335
- DE-A- 3 720 861
- GB-A- 1 120 262
- GB-A- 2 233 334
- US-A- 2 845 541
- US-A- 4 247 496
- US-A- 4 745 018

## Beschreibung

Die Erfindung betrifft die Verwendung eines großflächigen UV-Hochleistungsstrahlers mit einem durch eine einseitig gekühlte erste Metall-Elektrode und ein Dielektrikum begrenzten und mit einem Edelgas oder einem Gasgemisch gefüllten Entladungsraum, wobei auf der dem Entladungsraum abgewandten Oberfläche des Dielektrikums eine zweite, für die durch stille elektrische Entladung erzeugte Strahlung transparente Elektrode angeordnet ist, zur Behandlung von Oberflächen von Substraten oder Bauteilen aus organischen oder anorganischen Werkstoffen.

Ein solcher UV-Hochleistungsstrahler ist aus der EP-OS 0 254 111 bekannt. Der UV-Hochleistungsstrahler besteht aus einem durch eine einseitig gekühlte Metallelektrode und ein Dielektrikum begrenzten und mit einem Edelgas oder einem Gasgemisch gefüllten Entladungsraum. Das Dielektrikum und die auf der dem Entladungsraum abgewandten Oberfläche des Dielektrikums liegende zweite Elektrode sind für die durch stille elektrische Entladung erzeugte Strahlung transparent. Durch diese Konstruktion und durch eine geeignete Wahl der Gasfüllung wird ein großflächiger UV-Hochleistungsstrahler mit hohem Wirkungsgrad geschaffen. Mit Hilfe einer Gasfüllung aus Helium, bzw. Argon kann eine UV-Strahlung mit einer Wellenlänge zwischen 60 und 100 nm bzw. 107 und 165 nm erzeugt werden. Mit Hilfe einer Gasfüllung aus Xenon kann mit dem Hochleistungsstrahler UV-Strahlung mit einer Wellenlänge zwischen 160 und 190 nm erzeugt werden, wobei das Maximum hierbei bei 172 nm liegt. Eine Gasfüllung aus Argonfluorid bzw. Kryptonfluorid erlaubt die Erzeugung einer UV-Strahlung im Bereich von 180 bis 200 nm bzw. 240 bis 255 nm. Mit einem Gasgemisch aus Xenon und Chlor läßt sich mit dem Hochleistungsstrahler eine UV-Wellenlänge von 300 bis 320 nm und einem Gemisch aus Krypton und Chlor eine Wellenlänge von 222 nm erzeugen. Die UV-Hochlei- stungsstrahler arbeiten im quasi gepulsten Betrieb. Es besteht auch die Möglichkeit, zwei oder mehrere UV-Hochleistungsstrahler für die Oberflächenbehandlung zu verwenden, wobei jeder Hochleistungsstrahler UV-Strahlung mit einer anderen Wellenlänge erzeugt.

Substrate und Bauelemente aus organischen oder anorganischen Materialien werden in Zukunft bei der Realisierung hochwertiger Produkte im Bereich der Elektrotechnik, Mechanik, Optoelektronik, Abschirmtechnik, Druck- oder Lackiertechnik noch größere Bedeutung gewinnen. Insbesondere werden Substrate und Bauelemente aus Fasern, Fasermaterialien bzw. Faserverbundwerkstoffen, aber auch aus glatten Folien sowie Substrate und Bauteile aus Kunststoffen, Pappe und Papier in der Form benötigt, daß sie beschichtet werden können. Zu diesem Zweck benötigen sie eine Oberfläche, die gut benetzbar ist.

Ein zur Zeit nicht oder unbefriedigend gelöstes Problem ist die einwandfreie Benetzung solcher Substrate oder Bauelemente mit gasförmigen oder flüssigen Materialien. Wegen dieser mangelnden Benetzbarkeit kommt es häufig zu schlechten Produktionsqualitäten. Bis jetzt war es üblich, Oberflächen von Substraten und Bauteilen, soweit dies möglich war, mit Säuren, Laugen oder Halogen-Kohlenwasserstoffen für die Weiterbearbeitung zu reinigen oder vorzubehandeln. Die Kontrolle dieser Behandlung ist jedoch schwierig und mit einer großen Umweltbelastung verbunden. Zusätzlich bringt eine solche Behandlung unsaubere Arbeitsplatzbedingungen mit sich. Mit Hilfe von Plasmaverfahren wurde ebenfalls schon versucht, Oberflächen von Substraten und Bauteilen für die Weiterbehandlung zu reinigen oder vorzubereiten. Die Anwendung von Plasmaverfahren ist jedoch mit hohem Aufwand verbunden. Je nach Anregungsart des Plasmas wird nur eine schwache Wirkung auf der Oberfläche erzielt, bzw. die Anwendung des Verfahrens ist aufwendig. Oftmals ist es wegen der Wärmebelastung von nichttemperaturbeständigen Substraten und Bauteilen, die beispielsweise aus Kunststoff gefertigt sind, nicht anwendbar.

Aus der EP-A-0 492 335 (veröffentlicht am 1/7/92) ist ein Verfahren zum Abtragen und/oder Strukturieren von Oberflächen von Substraten durch partielle oder vollständige UV-Bestrahlung mit einer Wellenlänge zwischen 60 bis 400 nm bekannt; es handelt sich somit um einen Oberflächenabtrag, der zur Verbesserung der Oberflächenbenetzbarkeit nicht ohne weiteres geeignet ist.

Weiterhin ist es aus der US-A-47 45 018 bekannt, Oberflächen von faserverstärkten Polyesterteilen (FRP = fiber reinforced polyester) mittels UV-Strahlung durch Excimer-Laser im Bereich von 180 bis 260 nm zu behandeln, um eine bessere Vorbereitung zur Verklebung solcher FRP-Matrix-Werkstoffe ohne Zerstörung der inneren Struktur zu erzielen; dabei sollen die solchermaßen vorbehandelten Oberflächen mittels sandwichartig zwischengelagerter Klebstoffe auf Epoxidharz- oder Polyurethen-Basis zusammengefügt werden.

Weiterhin ist aus der GB-A-22 33 334 die Oberflächenbehandlung von Polymer-Werkstoffen durch UV-Bestrahlung mittels gepulste Excimer-Laser bekannt, um Kohlenwasserstoff-Verunreinigungen zu entfernen und eine reine, chemisch aktive Oberfläche zu erzielen; zur Erhöhung der Verbindungsfestigkeit von Klebstoffen ist auch eine Aufrauhung der Oberflächen im Mikro-Bereich vorgesehen.

Weiterhin beschreibt die US-A-42 47 496 die Oberflächenverbesserung von Plastikmaterial (Polyäthylen oder Polypropylen) mittels UV-Bestrahlung durch Quecksilberdampf-Entladungslampen mit einer Strahlungsenergie im Bereich von 5 bis 50 Joule/cm² (Polyäthylen) bzw. 1 bis 10 Joule/cm² (Polypropylen). Die Bestrahlung dient zur gezielten Veränderung der Oberflächeneigenschaft, wobei während der Bestrahlung zusätzlich eine Streckung des filmartig ausgebildeten Materials erfolgen kann.

Weiterhin ist aus der DE-A-37 20 861 ein Verfahren zur Verminderung der Oberflächen-Klebrigkeit vulkanisierbarer Kautschukartikel bekannt, bei dem die zu bestrahlenden Artikel kurzzeitig einer energiereichen Bestrahlung durch Laser oder Gasentladungslampe mit einem mono- oder polychromatischen Licht ausgesetzt werden, dessen größte Wellenlänge unterhalb von 400 nm - vorzugsweise bei 200 bis 300 nm - liegt.

Weiterhin beschreibt die US-PS 28 45 541 ein Verfahren zur Vorbereitung der Oberfläche eines Polyäthylen-Kunststoffilms mit UV-Bestrahlung mittels Quecksilberdampflampe von wenigstens 0,5 Microwatt//cm² im Wellenlängenbereich von 1800 bis 3200 Angström, um diese für einen späteren Aufdruck vorzubereiten.

Als problematisch erweist es sich bei der bekannten Oberflächenbehandlung, daß die von Laser oder Bogen-Entladungslampen erzeugte UV-Strahlung in der Praxis nicht ohne weiteres flächenhaft aufgebracht werden kann, wobei dann verhältnismäßig aufwendige Strahlungsführungssysteme erforderlich sind.

Der Erfindung liegt die Aufgabe zugrunde, die Verwendung eines aus der EP-A-0 254 111 bekannten UV-Strahlers zur Oberflächenbehandlung von Substraten und Bauteilen aus organischen oder anorganischen Werkstoffen anzugeben, bei dem die Oberflächen zur Weiterbehandlung gereinigt oder so modifiziert werden können, daß eine gute Benetzbarkeit gegeben ist.

Die Aufgabe wird erfindungsgemäß durch die Merkmale des Patentanspruchs 1 gelöst.

Erfindungsgemäß werden die Oberflächen von Substraten und Bauteilen aus organischen oder anorganischen Materialien teilweise oder vollständig flächig bzw. dreidimensional mit UV-Strahlung beaufschlagt. Vorzugsweise wird die UV-Strahlung einer inkohärenten Hochleistungsstrahlungsouelle verwendet. Durch die Behandung der Oberflächen wird die Haftfestigkeit für ein nachfolgendes Metallisieren, Bedrucken, Lackieren und Verkleben erhöht. Durch die erfindungsgemäße UV-Bestrahlung der Oberflächen werden Kraterbildungen bewirkt, die eine optimale Verankerung des Beschichtungsmaterials auf den behandelten Oberflächen ermöglichen. Durch eine photolytische Zersetzung von eventuell vorhandenen Ziehfetten und Ölen werden die Benetzungseigenschaften der Oberflächen verbessern. Die Benetzungseigenschaften werden durch UV-Strahlung auch dadurch verbessert, daß die Moleküle an den Oberflächen in einen energetisch höheren Bindungszustand versetzt werden, oder sogar offene Bindungen durch Bindungsbruch geschaffen werden. Die Oberflächenbehandlung kann bei Substraten und Bauteilen aus Fasern, Werkstoffen, die als Basis Fasermaterialien enthalten, Faserverbundwerkstoffen, Folien, Kunststoffen, Pappen, Papier, Metallen, Keramiken und Zellulose angewendet werden. Die Oberflächenbehandlung fördert die Haftfestigkeit von Beschichtungen aus Metallen, Dielektrika, Supraleitern, Halbleitern, Kunststoffen, Harzen, Farben, Klebern und Flüssigkeiten aller Art. Die Oberflächenbehandlung erlaubt die galvanische, stromlose und dampfförmige Beschichtung sowie das Sputtern des Beschichtungsmaterials. Die Oberflächenbehandlung begünstigt ebenfalls das nachfolgende Beschichten von Substraten und Bauteilen durch Tauchen, Besprühen und Bestreichen. Die Oberflächenbehandlung der Substrate und Bauelemente erfolgt unter Verwendung wenigstens eines UV-Hochleistungsstrahlers, der in der Lage ist, UV-Strahlung mit einer Wellenlänge zwischen 60 und 350 nm zu erzeugen. Die UV-Leistung sollte 10 bis 500 mW/cm² betragen. Die Oberflächenbehandlung wird je nach dem Material, aus dem das Substrat bzw. der Werkstoff gefertigt ist, einige Sekunden bis Minuten durchgeführt.

Weitere erfindungswesentliche Merkmale sind in den Unteransprüchen gekennzeichnet.

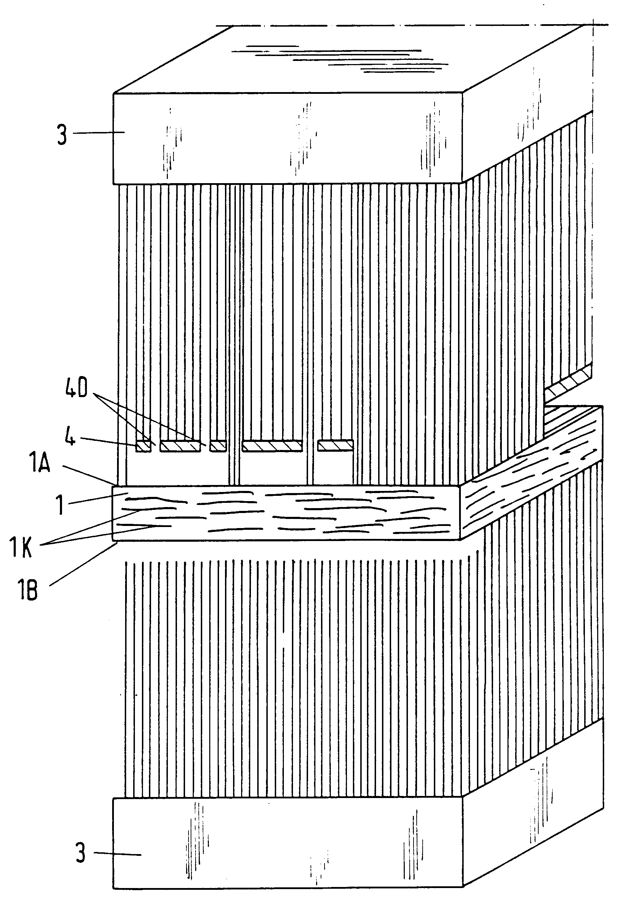

Das erfindungsgemäße Verfahren wird nachfolgend anhand einer Zeichnung näher erläutert. Die einzige Figur zeigt ein flächiges Substrat 1 mit rechteckigem Querschnitt, dessen Oberflächen 1A und 1B einer Oberflächenbehandlung unterzogen werden. Zu diesem Zweck ist in definiertem Abstand von den Oberflächen 1A und 1B je ein Hochleistungsstrahler 3 angeordnet. Das Substrat 1 ist bei dem hier dargestellten Ausführungsbeispiel aus Keramikfasern 1K gefertigt. Die erfindungsgemäße Oberflächenbehandlung kann jedoch bei allen Substraten und Bauelementen aus organischen oder anorganischen Werkstoffen durchgeführt werden. Insbesondere können Substrate oder Bauteile behandelt werden, die ausschließlich aus Fasern, Werkstoffen, die als Basis Fasermaterial enthalten, aus Kunststoffen, Pappe, Papier und Zellulose bzw. aus keramischen Materialien, Aluminiumoxid, Quarz, Glas oder Siliziumdioxid gefertigt sind. Die Oberflächenbehandlung läßt sich bei Bauteilen aus Fasern in Form von Vliesen, Geweben, Gewirken, Netzen, Sieben, Fibriden, Endlosfasern, Stapelfasern, Garnen, Zwirnen, Spinnkabeln, Rovings, Matten, Gelegen, Kurzfasern, Borsten, Folienbändchen, Flachfäden und Spleißfolien anwenden. Substrate und Bauteile aus Nitrilkautschuk, aus Glasfasern, Aramidfasern, Aluminiumoxidkeramiken, Polyurethanen, Polycarbonaten, Polypropylenen, Siliconen, Polytetrafluorethylenen, 1,4-Polybutadienen, Polycarbonat/Styrol-Polymerisatlegierungen, Polyhexamethylenadipamiden, Polylaurinlactamen und Polyimiden können ebenfalls vor einer Beschichtung einer UV-Oberflächenbehandlung durch Bestrahlung mit einem oder mehreren UV-Hochleistungsstrahlern 3 unterzogen werden. Erfindungsgemäß besteht die Möglichkeit, die Substratoberfläche bei Bedarf auch nur bereichsweise einer UV-Behandlung zu unterziehen. Zu diesem Zweck wird zwischen der Oberfläche 1A des Substrats 1 und dem UV-Hochleistungstrahler 3 eine Maske 4 angeordnet, deren Abmessungen an die Oberfläche 1A des Substrates angepaßt sind. Die Maske ist mit Durchlässen 4D versehen. Durch diese kann die von dem UV-Hochleistungsstrahler 3 kommende Strahlung auf die Oberfläche 1A gelangen. Die übrigen Bereiche der Oberfläche 1A werden von der UV-Behandlung ausgeschlossen. Die für die Oberflächenbehandlung verwendeten UV-Hochleistungstrahler 3 sind in Fig. 1 nur schematisch dargestellt. Eine detallierte Beschreibung eines solchen Hochleistungsstrahlers 3 kann der EP-OS 0 254 111 entnommen werden. Der UV-Hochleistungsstrahler 3 besteht aus einer durch eine einseitig gekühlte Metallelektrode (hier nicht dargestellt) und ein Dielektrikum (hier ebenfalls nicht dargestellt) begrenzten und mit einem Edelgas oder einem Gasgemisch gefüllten Entladungsraum (hier nicht dargestellt). Das Dielektrikum und die auf der dem Entladungsraum abgewandten Oberfläche des Dielektrikums liegende zweite Elektrode sind für die durch stille elektrische Entladung erzeugte Strahlung transparent. Durch diese Konstruktion und durch eine geeignete Wahl der Gasfüllung wird ein großflächiger UV-Hochleistungsstrahler mit hohem Wirkungsgrad geschaffen. Mit Hilfe einer Gasfüllung aus Helium bzw. Argon kann eine UV-Strahlung mit einer Wellenlänge zwischen 60 und 100 nm bzw. 107 und 165 nm erzeugt werden. Mit Hilfe einer Gasfüllung aus Xenon kann mit dem Hochleistungsstrahler 3 UV-Strahlung mit einer Wellenlänge zwischen 160 und 190 nm erzeugt werden, wobei das Maximum hierbei bei 172 nm liegt. Eine Gasfüllung aus Argonfluorid bzw. Kryptonfluorid erlaubt die Erzeugung einer UV-Strahlung im Bereich von 180 bis 200 nm bzw. 240 bis 255 nm. Mit einem Gasgemisch aus Xenon und Chlor läßt sich mit dem Hochleistungsstrahler eine UV-Wellenlänge von 300 bis 320 nm und einem Gemisch aus Krypton und Chlor eine Wellenlänge von 222 nm erzeugen. Die UV-Hochleistungsstrahler 3 arbeiten im quasi gepulsten Betrieb. Es besteht auch die Möglichkeit, zwei oder mehrere UV-Hochleistungsstahler für die Oberflächenbehandlung zuverwenden, wobei jeder Kochleistungsstrahler UV-Strahlung mit einer anderen Wellenlängen erzeugt.
Durch die Bestrahlung mit UV-Licht werden in den zu behandelnden Oberflächen Krater geschaffen, die besonders geeignet sind, eine gute Verankerung des nachfolgend aufgetragenen Beschichtungsmaterials zu bewirken. Daneben werden durch photolytische Zersetzung eventuell vorhandene Fette und Öle von den Oberflächen entfernt. Die behandelten Substrate und Bauelemente können mit Metallen, Dielektrika, Supraleitern und Halbleitern, Kunststoffen, Harzen, Farben, Klebern und Flüssigkeiten nach der Behandlung problemlos beschichtet werden. Die Beschichtung kann galvanisch, stromlos, durch Bedampfen, Sputtern, Tauchen, Sprühen, Benebeln und Bestreichen aufgebracht werden.

## Patentansprüche

1. Verwendung eines großflächigen UV-Hochleistungsstrahlers mit einem durch eine einseitig gekühlte erste Metall-Elektrode und ein Dielektrikum begrenzten und mit Edelgas oder einem Gasgemisch gefüllten Entladungsraum, wobei auf der dem Entladungsraum abgewandten Oberfläche des Dielektrikums eine zweite, für die durch stille elektrische Entladung erzeugte Strahlung transparente Elektrode angeordnet ist, zur Behandlung von Oberflächen von Substraten oder Bauteilen aus organischen oder anorganischen Werkstoffen, wobei die Oberflächen teilweise oder vollständig der Einwirkung von UV-Photonen einer definierten Wellenlänge aus dem UV-Hochleistungsstrahler ausgesetzt werden.

2. Verwendung eines UV-Hochleistungsstrahlers nach Anspruch 1, wobei die Oberflächen mit UV-Strahlung einer Wellenlänge zwischen 60 und 350 nm flächig oder dreidimensional bestrahlt werden.

3. Verwendung eines UV-Hochleistungsstrahlers nach einem der Ansprüche 1 oder 2, wobei Substrate oder Bauteile aus Fasern, Werkstoffen, deren Basis faserförmiges Material ist, Faserverbundwerkstoffen, Folien, Kunststoffen, Pappe, Papier und Zellulose, Dielektrika, Keramik, Metall und Siliziumcarbiden einer Oberflächenbehandlung durch Bestrahlung mit UV-Licht unterzogen werden.

4. Verwendung eines UV-Hochleistungsstrahlers nach einem der Ansprüche 1 bis 3, wobei Substrate oder Bauteile in Form von Vliesen, Geweben, Gewirken, Netzen, Sieben, Fibriden, Endlosfasern, Stapelfasern, Garnen, Zwirnen, Spinnkabeln, Rovings, Matten, Gelegen, Kurzfasern, Borsten, Folienbändchen, Flachfäden und Spleißfolien einer UV-Bestrahlung unterzogen werden.

5. Verwendung eines UV-Hochleistungsstrahlers nach einem der Ansprüche 1 bis 4, wobei Substrate oder Bauteile aus Nitrilkautschuk, Glasfasern, Aramidfasern, Aluminiumoxidkeramiken, Polyurethanen, Polycarbonaten, Polypropylenen, Silicon, 1,4-Polybutadienen, Polycarbonat/Styrol-Polymerisatlegierungen, Polyhexamethylenadipamiden, Polylaurinlactamen und Polyimiden auf den Oberflächen mit UV-Strahlung einer Wellenlänge zwischen 60 und 350 nm bestrahlt werden.

6. Verwendung wenigstens eines UV-Hochleistungsstrahlers, der eine Gasfüllung aus Helium, Argon, Argonfluorid, Kryptonfluorid, Xenon oder einem Gemisch aus Xenon und Chlor bzw. Krypton und Chlor aufweist, für die Oberflächenbehandlung mit UV-Strahlung mit einer Wellenlänge zwischen 60 und 350 nm nach einem der Ansprüche 1 bis 5.

7. Verwendung von UV-Hochleistungsstrahlern (3), die UV-Strahlung mit unterschiedlichen Wellenlängen erzeugen für die Oberflächenbehandlung nach einem der Ansprüche 1 bis 6.

## Claims

1. The use of a large-area UV high power emitter with a discharge chamber delimited by a first metal electrode, cooled on one side, and by a dielectric, and filled with noble gas or with a gas mixture, in which on the surface of the dielectric facing away from the discharge chamber a second electrode is arranged, which is transparent to the radiation produced by silent electric discharge, for the treatment of surfaces of substrates or components of organic or inorganic materials, in which the surfaces are exposed partially or completely to the action of UV photons of a defined wave length from the UV high power emitter.

2. The use of a UV high power emitter according to Claim 1, in which the surfaces are irradiated areally or three-dimensionally with UV radiation of a wave length between 60 and 350 nm.

3. The use of a UV high power emitter according to one of Claims 1 or 2, in which substrates or components of fibres, materials based on fibrous material, composite fibre materials, films, plastics, cardboad, paper and cellulose, dielectrics, ceramics, metal and silicon carbides are subjected to a surface treatment by irradiation with UV light.

4. The use of a UV high power emitter according to one of Claims 1 to 3, in which substrates or components in the form of fleeces, textile fabrics, knitted fabrics, nets, meshes, fibrides, endless fibres, staple fibres, yarns, twines, spun cables, rovings, mats, lays, short fibres, bristles, film strips, flat threads and splice films are subjected to a UV irradiation.

5. The use of a UV high power emitter according to one of Claims 1 to 4, in which susbtrates or components of nitrile rubber, glass fibres, aramide fibres, aluminium oxide ceramics, polyurethanes, polycarbonates, polypropylenes, silicon, 1,4-polybutadienes, polycarbonate/styrene polymerisate blends, polyhexamethylene adipamides, polylaurinlactames and polyimides on the surfaces are irradiated with UV radiation of a wave length between 60 and 350 nm.

6. The use of at least one UV high power emitter which has a gas filling of helium, argon, argon fluoride, krypton fluoride, xenon or a mixture of xenon and chlorine or krypton and chlorine, for surface treatment with UV radiation with a wave length between 60 and 350 nm according to one of Claims 1 to 5.

7. The use of UV high power emitters (3), which produce UV radiation with differing wave lengths for surface treatment according to one of Claims 1 to 6.

## Revendications

1. Emploi d'un émetteur de rayonnement à puissance élevée UV, de grande surface avec un espace de décharge limité par une première électrode métal refroidie d'un côté et un diélectrique et rempli avec du gaz noble ou un mélange de gaz, une deuxième électrode transparente pour le rayonnement engendré par des charges électriques calmes étant agencée sur la surface du diélectrique éloigné de l'espace de décharge, pour le traitement de surfaces de substrats ou de parties constitutives en matière d'usinage organique ou inorganique, les surfaces étant soumises, partiellement ou complètement, à l'effet de photons UV d'une longueur d'onde définie à partir de l'émetteur de rayonnement à puissance élevée UV.

2. Emploi d'un émetteur de rayonnement à puissance élevée UV selon la revendication 1, les surfaces étant irradiées, à plat ou tridimensionnellement, avec un rayonnement UV d'une longueur d'onde entre 60 et 350 nm.

3. Emploi d'un émetteur de rayonnement à puissance élevée UV selon une des revendications 1 ou 2, des substrats ou des parties constitutives en fibres ou matières d'usinage, dont la vase et du matériau en forme de fibres, matériau d'usinage composite à base de fibres, feuilles, matières synthétiques, carton, papier et cellulose, diélectriques, céramiques, métal et carbure de silicium étant soumis à un traitement de surface par irradiation avec de la lumière UV.

4. Emploi d'un émetteur de rayonnement à puissance élevée UV selon une des revendications 1 à 3, des substrats ou des parties constitutives sous forme de non tissés, tissés, éléments tricotés, treillis, tamis, éléments fibrillés, fibres sans fin, feutres, fils, retordage, câbles filés, stratifils de verre textile, nattes, dépôts, fibres courtes, poils de brosse, petites bandes de feuilles, fils plats, et feuilles fibrillées étant soumis à une irradiation UV.

5. Emploi d'un émetteur de rayonnement à puissance élevée UV selon une des revendications 1 à 4, des substrats ou des parties constitutives de caoutchouc nitrile, de fibres de verre, de fibres d'aramide, de céramiques d'oxyde d'aluminium, de polyuréthanes, de polycarbonates, de polypropylènes, de silicium, de polybutadiènes-1,4, d'alliages de polymérisat-polycarbonate/styrolène, d'adipamides de polyhexaméthyle, de polyaurinlactames et de polyimides, étant irradiés sur les surfaces avec un rayonnement UV d'une longueur d'onde entre 60 et 350 nm.

6. Emploi d'un émetteur de rayonnement à puissance élevée UV, qui présente un remplissage de gaz d'hélium, d'argon, de fluorure d'argon, de fluorure de krypton, de xénon ou d'un mélange de xénon et de chlore ou bien de krypton et de chlore, pour le traitement de surface avec rayonnement UV avec une longueur d'onde entre 60 et 350 nm, selon une des revendications 1 à 5.

7. Emploi d'un émetteur de rayonnement à puissance élevée UV (3), qui engendre un rayonnement UV avec des longueurs d'onde différentes, pour le traitement de surface selon une des revendications 1 à 6.
